# EUROPÄISCHE PATENTSCHRIFT

(11) **EP 2 252 810 B1**
(45) Veröffentlichungstag und Bekanntmachung des Hinweises auf die Patenterteilung: **02.11.2011**
(21) Anmeldenummer: 09723303.5
(22) Anmeldetag: 13.03.2009
(51) Int. Cl.: F16H 35/00

(54) **MÖBELANTRIEB ZUM ANTREIBEN EINES BEWEGBAREN MÖBELTEILS**
FURNITURE DRIVE FOR DRIVING A MOVABLE PIECE OF FURNITURE
SYSTEME DE DEPLACEMENT DE MEUBLE POUR L'ENTRAÎNEMENT D'UN ELEMENT DE MEUBLE MOBILE

(30) Priorität: 21.03.2008 AT 4472008
(43) Veröffentlichungstag der Anmeldung: 24.11.2010
(73) Patentinhaber: Julius Blum GmbH, 6973 Höchst (AT)
(72) Erfinder: HUBER, Edgar, A-6971 Hard (AT); FRIESENECKER, Gerald, A-6923 Lauterach (AT)
(74) Vertreter: Hofinger, Stephan
(86) Internationale Anmeldenummer: PCT/AT2009/000100
(87) Internationale Veröffentlichungsnummer: WO 2009/114883

(56) Entgegenhaltungen:
- EP-A1- 1 329 618
- EP-A2- 1 788 179
- AT-U1- 7 573
- JP-A- 2004 190 413

## Beschreibung

Die vorliegende Erfindung betrifft einen Möbelantrieb zum Antreiben eines bewegbaren Möbelteils, aufweisend einen Elektromotor, einen zwischen zwei Endlagen hin und her bewegbaren Aktuator zur Kraftausübung auf das anzutreibende Möbelteil und ein zwischen Elektromotor und Aktuator geschaltenes Getriebe, wobei das Getriebe wenigstens eine als Unrundgetriebe ausgebildete Getriebestufe mit zwei miteinander kämmenden Zahnrädern aufweist.

Aus verschiedenen Gründen (geringere Anschaffungskosten, Platzbedarf, Strombedarf) ist es wünschenswert, einen möglichst kleinen Elektromotor einzusetzen, welcher darüber hinaus vorteilhafter Weise ohne eine komplizierte Regelelektronik zur Regelung des Drehmoments auskommen soll.

Die EP 1 788 179 A 2 offenbart einen Möbelantrieb nach dem Oberbegiff des Anspruchs 1.

Aus der prioritätsälteren österreichischen Patentanmeldung A 1542/2007 (AT 505 879 A1) der Anmelderin geht ein Möbelantrieb mit einem variierenden Übersetzungsverhältnis hervor, welches durch eine Kniehebelanordnung erzielt wird.

Die EP 1 194 708 B1 beschreibt eine Antriebsvorrichtung zum Antreiben eines Aktuators mit einer als Unrundgetriebe ausgebildeten Getriebestufe, wobei das Unrundgetriebe zwei miteinander kämmende Zahnräder aufweist. Diese Schrift lehrt, dass in vielen Anwendungsfällen von Getrieben ein maximales Abtriebsmoment nur in einer Stellung benötigt wird, wobei solche Anforderungen beispielsweise bei Getrieben auftreten sollen, die eine Schließfunktion erfüllen.

Bei einem Antrieb über einen Elektromotor und einem Getriebe mit konstanter Übersetzung besteht gemäß dieser Schrift der Nachteil, dass die Höhe der Übersetzung einerseits so hoch sein muss, dass mit dem verwendeten Elektromotor das maximale Drehmoment erreicht werden kann, was in der Regel eine hohe Übersetzung erfordert. Andererseits bedeute eine hohe Übersetzung auch eine lange Stellzeit des Getriebes.

Statt einem Getriebe mit konstanter Übersetzung schlägt die EP 1 194 708 B1 ein zweistufiges Getriebe vor, wobei die erste Getriebestufe als Wellgetriebe (Harmonic-Drive-Getriebe) und die zweite Stufe als Unrundgetriebe ausgebildet ist.

Konkrete Beispiele für vorteilhafte Übersetzungsverhältnisverläufe lehrt diese Schrift nicht. Ein besonderes Augenmerk wird auf das Wechselspiel zwischen Drehmoment und Stellzeit gerichtet.

Die EP 1 194 708 B1 ist aufgrund ihrer Fixierung auf das Spannungsverhältnis zwischen Drehmoment und Stellzeit bei Anwendungsfällen, wo dieses Spannungsverhältnis nur eine sehr untergeordnete Rolle spielt von nur sehr eingeschränkter Bedeutung.

Aus der EP 1 898 036 A1 geht ein Betätigungsaktuator für eine Fahrzeugklappe hervor, der mit einem Unrundgetriebe, das zwei miteinander kämmende Zahnräder aufweist, versehen ist. Diese Schrift lehrt, dass es bei Kraftfahrzeugklappen notwendig ist, die Kraftfahrzeugklappe mit einem genügend großen Drehmoment zu beaufschlagen, um die während des Schließvorgangs durch eine Dichtung hervorgerufenen Reaktionskräfte zu überwinden. Dies wird so gelöst, dass die Fahrzeugklappe während des überwiegenden Teils der Schließbewegung über ein verhältnismäßig kleines Übersetzungsverhältnis betätigt wird. Wenn sich die Kraftfahrzeugklappe der geschlossenen Stellung nähert und insbesondere wenn sie gegen eine Dichtung gedrückt wird, wird sie mit einem größeren Übersetzungsverhältnis angetrieben.

Die Öffnungsbewegung wird in der EP 1 898 036 A1 nicht behandelt, was darauf zurückzuführen ist, dass Fahrzeugklappen meist manuell geöffnet werden.

In Bezug auf einen gattungsgemäßen Möbelantrieb mit einem zwischen zwei Endlagern hin und her bewegten Aktuator ist daher die EP 1 898 036 A1 nicht relevant.

Einen noch entfernteren Stand der Technik stellt die DE 197 39 851 A1 dar. Diese lehrt eine Scheibenwischvorrichtung mit zwei von einem einzigen Elektromotor angetriebenen Scheibenwischhebeln, wobei ein Unrundgetriebe zur Erzeugung einer Verzögerung oder Beschleunigung der Hin- und Herbewegung der Scheibenwischhebel in vorbestimmten Bereichen vorgesehen ist.

Aufgabe der Erfindung ist es einen Möbelantrieb bereitzustellen, welcher unter Verwendung eines an sich bekannten Unrundgetriebes ein vorteilhafteres Betriebsverhalten aufweist als solche Möbelantriebe, bei denen das Übersetzungsverhältnis über den gesamten Bewegungsweg des bewegbaren Möbelteils konstant ist.

Die Erfindung löst diese Aufgabe durch einen Möbelantrieb mit den Merkmalen des Anspruchs 1.

Durch die feste Verbindung eines der beiden Zahnräder des Unrundgetriebes mit dem Aktuator und der Tatsache, dass die beiden Zahnräder des Unrundgetriebes miteinander kämmen, ist sicher gestellt, dass es zwischen der Stellung des Aktuators und der relativen Stellung der beiden Zahnräder des Unrundgetriebes zueinander eine 1:1 - Entsprechung gibt. Insbesondere weist das Unrundgetriebe dadurch zwei Endstellungen auf, welche mit den Endlagen des Aktuators korrespondieren. Diese Maßnahme erlaubt es weiter vorzusehen, dass sich das Übersetzungsverhältnis bei einer Drehung der Zahnräder des Unrundgetriebes ausgehend von den beiden Endstellungen über einen definierten Drehwinkelbereich verkleinert.

Beim erfindungsgemäßen Möbelantrieb wird daher erreicht, dass das vom Elektromotor über das Getriebe auf den Aktuator ausgeübte Drehmoment im Bereich der Endstellungen des Unrundgetriebes und über die oben angesprochene Korrespondenz damit auch im Bereich der entsprechenden Endlagen des Aktuators größer ist als in einem Bereich zwischen den Endlagen des Aktuators. Im Montagezustand des Möbelantriebes an oder in einem Möbelkorpus, wobei der Aktuator mit dem anzutreibenden Möbelteil verbunden ist, entsprechen die Endlagen des Aktuators einer geschlossenen bzw. ganz geöffneten Stellung des anzutreibenden Möbelteiles. Erfindungsgemäß steht somit beim Start aus den Endlagen, wenn der Elektromotor erst langsam anfährt, ein besonders großes Drehmoment zur Verfügung. In beiden Endlagen (geschlossen bzw. ganz geöffnet) steht somit durch die erfindungsgemäßen Maßnahmen ein optimales Drehmoment zur Verfügung.

Anzumerken ist, dass die feste Verbindung oder Kopplung eines der beiden Zahnräder des Unrundgetriebes mit dem Aktuator natürlich an sich lösbar sein kann, um beispielsweise die Montage des Möbelantriebes zu erleichtern oder um Teile auszutauschen. Wesentlich ist nur, dass während des Betriebes des Möbelantriebes eine Korrespondenz zwischen den Endlagen des Aktuators und den Endstellungen des Unrundgetriebes durch die Verbindung oder Kopplung sicherstellbar ist.

Weitere vorteilhafte Ausführungsformen der Erfindung sind in den abhängigen Ansprüchen definiert.

Schutz wird auch begehrt für ein Möbel mit einem bewegbar gelagerten Möbelteil (z.B. Klappe, Türe oder Schublade) mit einem erfindungsgemäßen Möbelantrieb.

Weitere Vorteile und Einzelheiten der Erfindung ergeben sich anhand der Figuren sowie der dazugehörigen Figurenbeschreibung. Dabei zeigen:
Fig. 1 eine perspektivische Ansicht eines erfindungsgemäßen Möbelantriebes,
Fig. 2a, 2b den Kräftestrang zwischen Elektromotor und Aktuator des in Fig. 1 dargestellten Möbelantriebes in einer perspektivischen Ansicht von vorne bzw. hinten,
Fig. 3 eine Darstellung entsprechend der Fig. 2a, 2b, wobei jedoch auf die Darstellung
   aller nicht unmittelbar zum Antriebsstrang gehörender Bauteile verzichtet wurde,
Fig. 4a - 4c ein bei einem erfindungsgemäßen Möbelantrieb einsetzbares Unrundgetriebe
   in drei verschiedenen Stellungen und
Fig. 5a, 5b den erfindungsgemäßen Möbelantrieb in Montagestellung in einem
   Möbelkorpus.

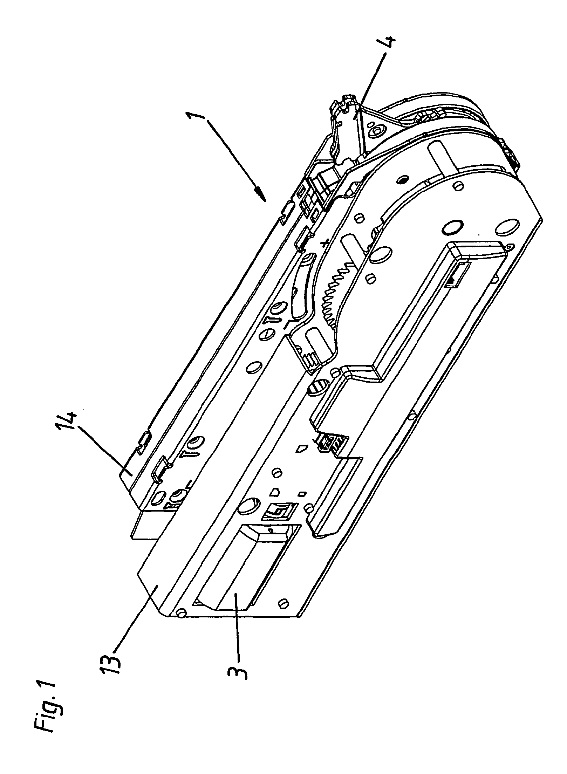

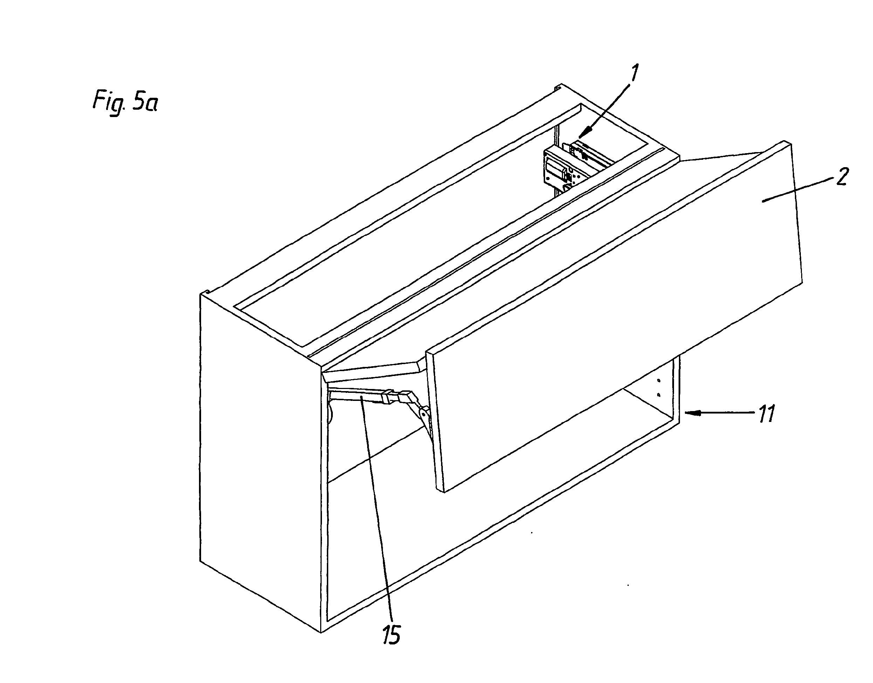

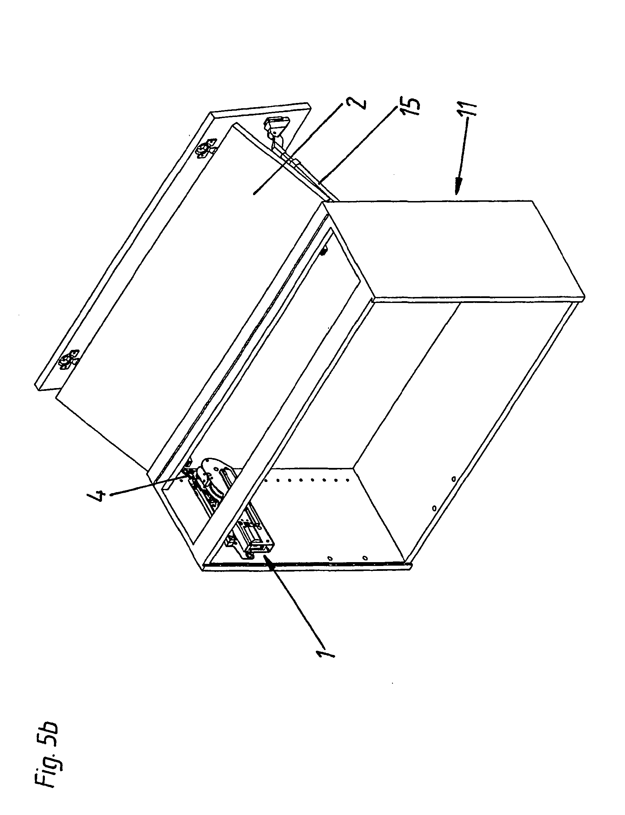

Der in Fig. 1 dargestellte Möbelantrieb 1 besteht in diesem Ausführungsbeispiel aus zwei lösbar miteinander verbundenen Baueinheiten 13, 14. Dabei stellt die Baueinheit 14 einen für sich genommen voll funktionsfähigen Stellantrieb für eine Möbelklappe dar, wie er an sich bekannt ist, sodass nicht näher auf ihn eingegangen werden muss. Besonders hingewiesen sei nur auf den hier im Bereich der Baueinheit 14 angeordneten Aktuator 4, über welchen die Kraftausübung auf das bewegbare Möbelteil 2 über ein Hebelwerk 15 (siehe Fig. 5) erfolgt.

Der Elektromotor 3, das Getriebe 5 und eine mit dem Aktuator 4 drehfest verbundene Welle 12 sind in der Baueinheit 13 angeordnet, welche in den folgenden Figuren näher erläutert wird.

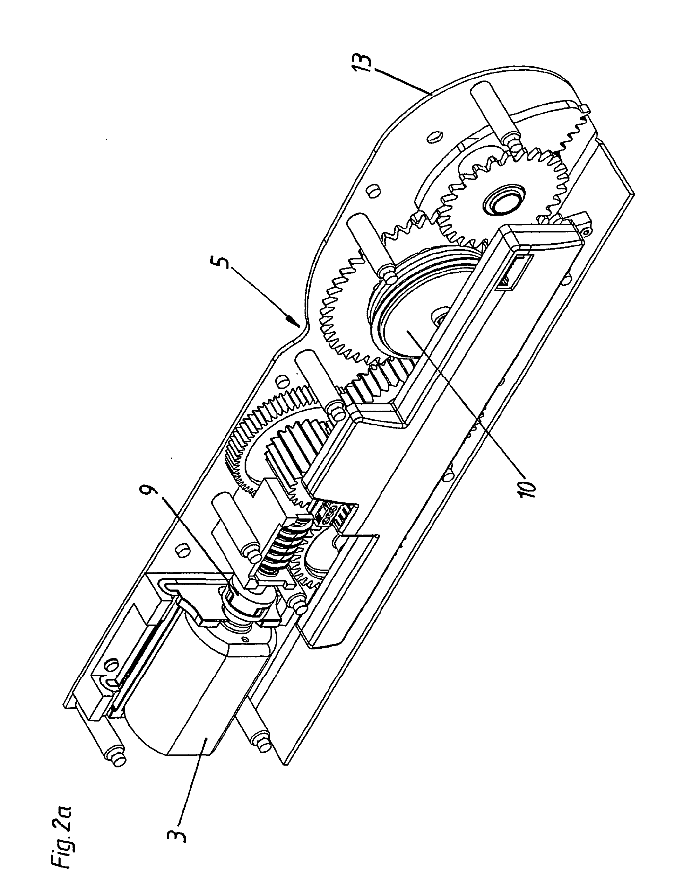

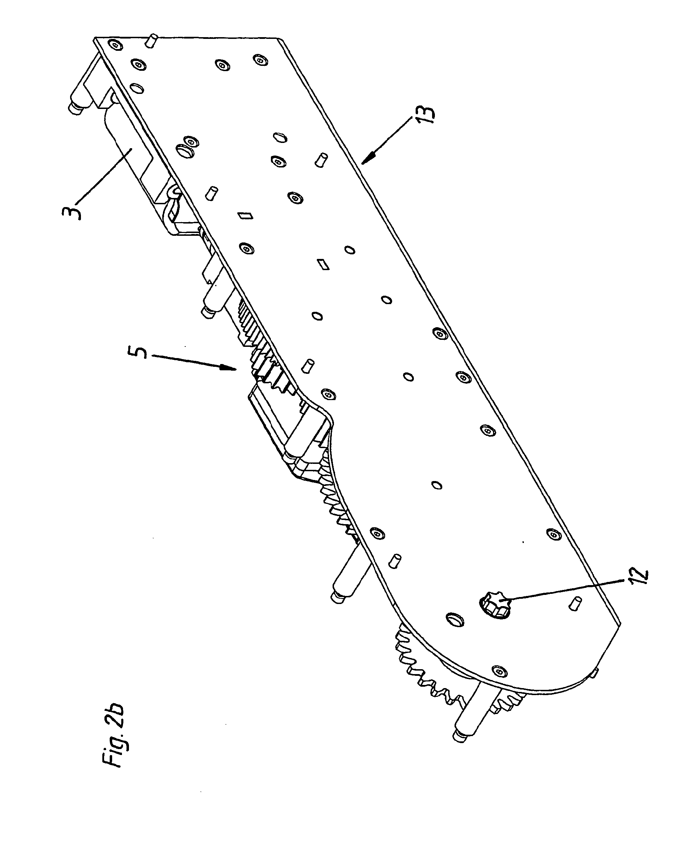

Die Fig. 2a und 2b zeigen die Baueinheit 13 bei abgenommener Baueinheit 14. Die Kraftübertragungsschnittstelle zwischen den beiden Baueinheiten 13, 14 stellt dabei die vom Elektromotor 3 über das Getriebe 5 antreibbare Welle 12 dar, welche profiliert ausgebildet ist und in eine entsprechend ausgebildete Vertiefung, die mit dem Aktuator 4 in Verbindung steht, eingreift. Dreht sich die Welle 12, so wird auch der Aktuator 4 entsprechend gedreht.

Der Antriebsstrang (siehe Fig. 2a) des erfindungsgemäßen Möbelantriebes 1 beginnt in Fig. 2a links mit dem Elektromotor 3, welcher über einen Schneckentrieb mit einer ersten Getriebestufe des Getriebes 5 zusammen wirkt. Zwischen Elektromotor 3 und im Getriebe 5 ist dabei eine Klauenkupplung 9 angeordnet, welche der Schallentkopplung und dem Ausgleich von Achsfehlern dient. Das Getriebe 5 weist in diesem Ausführungsbeispiel weiters eine Überlastsicherung 10 auf, welche Beschädigungen des Elektromotors 3 durch eine übermäßige Kraftausübung auf den Aktuator 4 verhindern soll. Eine Freilaufkupplung 16 gestattet über einen definierten Bereich (z.B. kurz vor der Schließstellung des Möbelteiles 2) die Bewegung des Möbelteiles 2 ohne Behinderung durch den Elektromotor 3. Hierdurch kann in diesem Bereich ein bevorzugter Bewegungsablauf des Möbelteiles 2 durch rein mechanische Komponenten (z.B. Einzugsvorrichtung) erzielt werden, statt hierfür den Elektromotor 3 über eine Regelung regeln zu müssen.

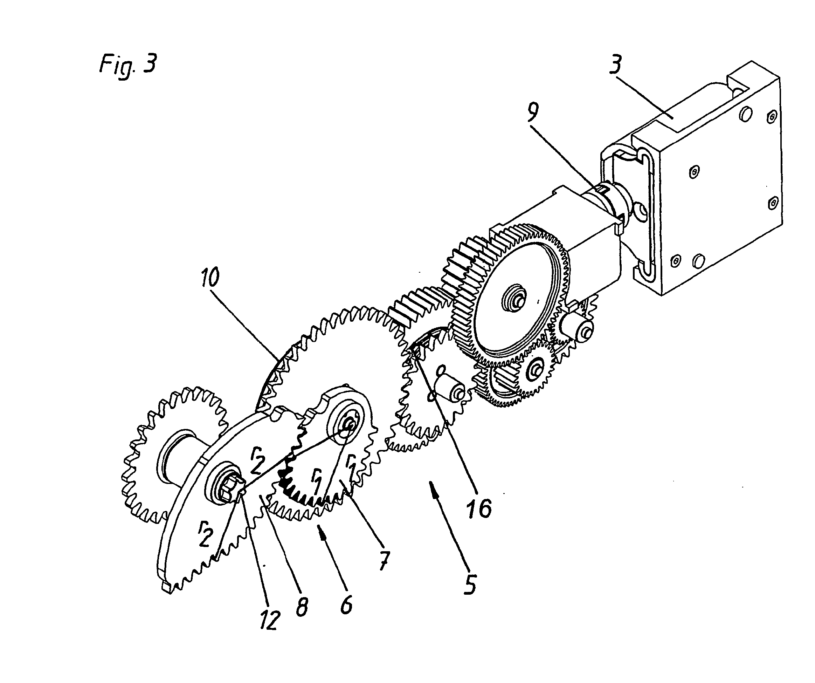

Von besonderem Interesse sind nun die besonders gut in Fig. 3 erkennbaren Zahnräder 7, 8 der als Unrundgetriebe 6 ausgebildeten Getriebestufe. Eingezeichnet sind zwei unterschiedliche Radien r1, r2, wobei sich die Radien r1 auf das Zahnrad 7 und die Radien r2 auf das Zahnrad 8 beziehen. Von Bedeutung ist nun, dass sich die jeweiligen Radien r1, r2 (jeweils gemessen von der jeweiligen Drehachse des Zahnrades bis zum Zahnkranz) in vordefinierter Weise so ändern, dass sich der gewünschte Drehmomentsverlauf ergibt. Da hier die Drehachsen der beiden Zahnräder 7, 8 in einem festen Abstand zueinander angeordnet sind, muss sich hier der Radius r1 des mit dem Elektromotors 3 gekoppelten Zahnrades 7 bzw. der Radius r2 des mit dem Aktuator 4 verbundenen Zahnrades 8 jeweils so ändern, dass sich in Summe genau der Abstand zwischen den beiden Drehachsen ergibt.

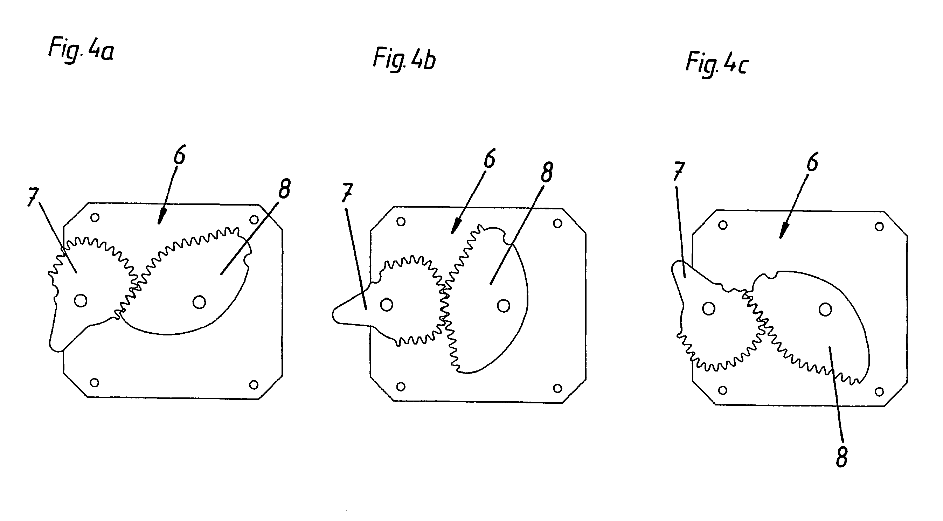

Die Fig. 4a - 4c zeigen ein erfindungsgemäß einsetzbares Unrundgetriebe 6, welches sich in der konkreten Ausführung etwas von dem in den Figuren 1 - 3 dargestellten, Unrundgetriebe 6 unterscheidet. Dieser Unterschied betrifft jedoch nur die Ausbildung der Zahnräder 7,8 in einem Bereich entfernt vom Zahnkranz und ist daher für die erfindungsgemäße Wirkungsweise unbedeutend.

Die in Fig. 4a bzw. 4c dargestellten Endstellungen des Unrundgetriebes 6 korrespondieren mit einer geschlossen Endlage (Fig. 4a) des Möbelteiles 2 bzw. mit einer voll geöffneten Endlage (Fig. 4c) des bewegbaren Möbelteiles 2. Die Stellung der Fig. 4b entspricht einer Zwischenstellung des bewegbaren Möbelteiles 2. Von Bedeutung ist nun, dass sich das Übersetzungsverhältnis des Unrundgetriebes und damit des gesamten Getriebes 5 bei einer Drehung der Zahnräder 7, 8, ausgehend von den Endstellungen der Fig. 4a und 4c, jeweils über einen definierten Drehwinkelbereich verkleinert. Im dargestellten Ausführungsbeispiel weist das Übersetzungsverhältnis ungefähr bei der Hälfte des gesamten, zwischen den beiden Endstellungen befindlichen Drehwinkelbereiches, einen minimalen Wert auf (gleichbedeutend mit einem minimalen Drehmoment des als Abtriebrads fungierenden Zahnrads 8 und einer maximalen umfangseitigen Geschwindigkeit des Zahnrads 8). Im gezeigten Ausführungsbeispiel entspricht der dargestellte Drehwinkelbereich zwischen den beiden Endstellungen einem Öffnungswinkel des bewegbaren Möbelteiles 2 von ca. 150°. Andere Öffnungswinkel und entsprechend ausgebildete Drehwinkelbereiche des Unrundgetriebes 6 sind natürlich denkbar.

Je nach Stellung der beiden Zahnräder 7, 8 zueinander ergeben sich unterschiedliche effektive Hebellängen für die Kraftübermittlung und somit die gewünschten unterschiedlichen Drehmomente.

Die Fig. 5a und 5b zeigen jeweils die Vorder- bzw. Rückansicht eines Möbels 11, wobei an der linken Seite des Möbelkorpus ein erfindungsgemäßer Möbelantrieb 1 montiert wurde. Der Aktuator 4 des Möbelantriebes 1 steht dabei über ein Hebelwerk 15 in Verbindung mit dem anzutreibenden Möbelteil 2. Im dargestellten Ausführungsbeispiel ist nur an einer Seite des Möbelkorpus ein erfindungsgemäßer Möbelantrieb 1 vorgesehen, während auf der anderen Seite nur die mechanische Baueinheit 14 angeordnet ist. Denkbar wäre natürlich auch das Vorsehen von Baueinheiten 13 und damit vollständiger erfindungsgemäßer Möbelantriebe 1 an beiden Seiten des Möbelkorpus.

Die Auslösung dieses erfindungsgemäßen Möbelantriebs 1 kann in, an sich bekannter Weise über eine Touch-Latch-Funktionalität bewirkt werden. Bei dieser Funktionalität wird durch einen Sensor eine durch einen Benutzer verursachte geringfügige Bewegung des bewegbaren Möbelteiles 2 (z.B. Eindrücken oder Ziehen) detektiert und infolgedessen der Aktivierungsbefehl an den Möbelantrieb 1 gegeben. Dies erfolgt durch eine an sich bereits bekannte Steuer- bzw. Regeleinheit für den Möbelantrieb 1, welche im Möbelantrieb 1 selbst integriert sein kann.

Beim in den Figuren dargestellten bevorzugten Ausführungsbeispiel sind die Zahnräder 7, 8 insofern etwas asymmetrisch ausgebildet, als sich das Übersetzungsverhältnis ausgehend von der Endstellung der Zahnräder 7, 8, welche der geschlossenen Endlage des Möbelteils entspricht, stärker verkleinert als ausgehend von der Endstellung der Zahnräder 7, 8, welche der geöffneten Endlage des Möbelteils entspricht. Der Grund hierfür besteht darin, dass beim bevorzugten Ausführungsbeispiel das Möbelteil eine Klappe ist, die aus der geöffneten Endlage durch die Unterstützung der Schwerkraft und das Fehlen eines aufzuladenden Kraftspeichers einer Einzugsautomatik leichter in Bewegung gesetzt werden kann.

Alle Darstellungen der Figuren sind maßstabsgerecht und winkeltreu.

## Patentansprüche

1. Möbelantrieb zum Antreiben eines bewegbaren Möbelteils, aufweisend einen Elektromotor (3), einen zwischen zwei Endlagen hin und her bewegbaren Aktuator (4) zur Kraftausübung auf das anzutreibende Möbelteil (2) und ein zwischen Elektromotor (3) und Aktuator (4) geschaltenes Getriebe (5), **dadurch gekennzeichnet, dass** das Getriebe (5) wenigstens eine als Unrundgetriebe (6) ausgebildete Getriebestufe mit zwei miteinander kämmenden Zahnrädern (7, 8) aufweist, dass eines der beiden Zahnräder (7,8) fest mit dem Aktuator (4) verbunden oder gekoppelt ist und das andere Zahnrad (7,8) mit dem Elektromotor (3) gekoppelt ist, sodass das Unrundgetriebe (6) zwei Endstellungen aufweist, welche mit den Endlagen des Aktuators (4) korrespondieren, und dass sich das Übersetzungsverhältnis bei einer Drehung der Zahnräder (7,8) ausgehend von den Endstellungen über einen definierten Drehwinkelbereich verkleinert.

2. Möbelantrieb nach Anspruch 1, **dadurch gekennzeichnet, dass** die Drehachsen der beiden Zahnräder (7, 8) des Unrundgetriebes (6) in einem festen Abstand zueinander angeordnet sind.

3. Möbelantrieb nach Anspruch 2, **dadurch gekennzeichnet, dass** sich der Radius (r1) des mit dem Elektromotor (3) gekoppelten Zahnrads (7) ausgehend von den Endstellungen über den definierten Drehwinkelbereich vergrößert und dass sich der Radius (r2) des mit dem Aktuator (4) verbundenen oder gekoppelten Zahnrads (8) entsprechend verkleinert.

4. Möbelantrieb nach einem der Ansprüche 1 bis 3, **dadurch gekennzeichnet, dass** das Übersetzungsverhältnis ungefähr bei der Hälfte des gesamten zwischen den beiden Endstellungen befindlichen Drehwinkelbereichs einen minimalen Wert aufweist.

5. Möbelantrieb nach einem der Ansprüche 1 bis 4, **dadurch gekennzeichnet, dass** zwischen dem mit dem Elektromotor (3) gekoppelten Zahnrad (7) und dem Elektromotor (3) eine Freilaufkupplung (9) und/oder eine Überlastsicherung (10) geschalten ist bzw. sind.

6. Möbelantrieb nach einem der Ansprüche 1 bis 5, **dadurch gekennzeichnet, dass** der Aktuator (4) über eine drehfest mit dem Zahnrad (8) verbundene Welle (12) durch das Zahnrad (8) antreibbar ist.

7. Möbel mit einem bewegbar gelagerten Möbelteil, **gekennzeichnet durch** einen Möbelantrieb nach einem der Ansprüche 1 bis 6.

8. Möbel nach Anspruch 7, wobei das Möbelteil (2) als Klappe, Türe oder Schublade ausgebildet ist.

## Claims

1. A furniture drive for driving a movable furniture part comprising an electric motor (3), an actuator (4) reciprocatable between two end positions to apply force to the furniture part (2) to be driven, and a transmission (5) connected between the electric motor (3) and the actuator (4), **characterized in that** the transmission (5) has at least one transmission stage in the form of an eccentric transmission (6) with two mutually meshing gears (7, 8), that one of the two gears (7, 8) is fixedly connected or coupled to the actuator (4) and the other gear (7, 8) is coupled to the electric motor so that the eccentric transmission (6) has two end positions corresponding to the end positions of the actuator (4) and that the transmission ratio decreases upon a rotation of the gears (7, 8) from the end positions over a defined rotary angle range.

2. A furniture drive according to claim 1, **characterised in that** the axes of rotation of the two gears (7, 8) of the eccentric transmission (6) are arranged at a fixed spacing relative to each other.

3. A furniture drive according to claim 2 **characterised in that** the radius (r1) of the gear (7) coupled to the electric motor (3) increases starting from the end positions over the defined rotary angle range and the radius (r2) of the gear (8) connected or coupled to the actuator (4) correspondingly decreases.

4. A furniture drive according to one of claims 1 to 3 **characterised in that** the transmission ratio is of a minimum value approximately at half the total rotary angle range which is between the two end positions.

5. A furniture drive according to one of claims 1 to 4 **characterised in that** a freewheel coupling (9) and/or an overload safety device (10) is or are connected between the gear (7) coupled to the electric motor (3) and the electric motor (3).

6. A furniture drive according to one of claims 1 to 5 **characterised in that** the actuator (4) is drivable by the gear (8) by way of a shaft (12) non-rotatably connected to the gear (8).

7. An article of furniture comprising a movably mounted furniture part, **characterised by** a furniture drive according to one of claims 1 to 6.

8. An article of furniture according to claim 7 wherein the furniture part (2) is in the form of a flap, door or drawer.

## Revendications

1. Entraînement pour meuble pour l'entraînement d'une partie mobile de meuble, présentant un moteur électrique (3), un actionneur (4) mobile dans un sens et dans l'autre entre deux positions extrêmes pour exercer une force sur la partie de meuble (2) à entraîner et un engrenage (5) monté entre le moteur électrique (3) et l'actionneur (4), **caractérisé en ce que** l'engrenage (5) présente au moins un étage d'engrenage, constitué en tant qu'engrenage ovale (6), avec deux roues dentées (7, 8) engrenant l'une avec l'autre, **en ce qu'**une des deux roues dentées (7, 8) est raccordée ou couplée de façon fixe à l'actionneur (4), et **en ce que** l'autre roue dentée (7, 8) est couplée au moteur électrique (3), de sorte que l'engrenage ovale (6) présente deux emplacements extrêmes qui correspondent aux positions extrêmes de l'actionneur (4), et **en ce que** le rapport de transmission diminue lors d'une rotation des roues dentées (7, 8) en partant des emplacements extrêmes sur une plage d'angle de rotation définie.

2. Entraînement pour meuble selon la revendication 1, **caractérisé en ce que** les axes de rotation des deux roues dentées (7, 8) de l'engrenage ovale (6) sont disposés avec un intervalle fixe entre eux.

3. Entraînement pour meuble selon la revendication 2, **caractérisé en ce que** le rayon (r1) de la roue dentée (7) couplée au moteur électrique (3) augmente en partant des emplacements extrêmes sur la plage d'angle de rotation définie, et **en ce que** le rayon (r2) de la roue dentée (8) raccordée ou couplée à l'actionneur (4) diminue de façon correspondante.

4. Entraînement pour meuble selon l'une des revendications 1 à 3, **caractérisé en ce que** le rapport de transmission présente une valeur minimale à peu prés pour la moitié de la totalité de la plage d'angle de rotation située entre les deux emplacements extrêmes.

5. Entraînement pour meuble selon l'une des revendications 1 à 4, **caractérisé en ce que**, entra la roue dentée (7) couplée au moteur électrique (3) et le moteur électrique (3), il est monté un accouplement à roue libre (9) et/ou une protection contre la surcharge (10).

6. Entraînement pour meuble selon l'une des revendications 1 à 5, **caractérisé en ce que** l'actionneur (4) peut être entraîné par la roue dentée (8) par le biais d'un arbre (12) raccordé, de façon bloquée en rotation, à la roue dentée (8).

7. Meuble avec une partie de meuble supportée de façon mobile, **caractérisé par** un entraînement de meuble selon l'une des revendications 1 à 6.

8. Meuble selon la revendication 7, la partie de meuble (2) étant constituée en tant qu'abattant, porte ou tiroir.
